# EUROPEAN PATENT APPLICATION

(11) **EP 2 457 436 A1**
(43) Date of publication of application: **30.05.2012**
(21) Application number: 10192616.0
(22) Date of filing: 25.11.2010
(51) Int. Cl.: A01G 9/14, B32B 27/00, B32B 27/02, A01G 9/22

(54) **Use of halogen-free fire-resistant polymer films for strips of woven blanket structures**

(71) Applicant: Amcor Flexibles Transpac N.V., 1935 Zaventem (BE)
(72) Inventor: Bögels, Erik, 9000, Gent (BE); Van Faassen, Raymond, 8639, BX Leeuwarden (NL)
(74) Representative: pronovem

(57) **Abstract**

The present invention relates to the use of halogen-free, fire-resistant polymer films or metal-polymer film laminates for the manufacturing of strips to be woven into blankets, the polymer films comprising a polymer selected from the group consisting of polycarbonate, polycarbonate-polysiloxane block-copolymers, and blends of polycarbonate and polysiloxane.

## Description

### Field of the invention

The present invention relates to the use of halogen-free and fire-resistant polymer films and multiple-layer metal polymer film laminates suitable to be cut into strips and woven into blankets, preferably destined to greenhouses. The polymer film for those strips is extruded and comprises a thermoplastic polymer matrix of polycarbonate, block copolymers of polycarbonate and polysiloxane, and possibly blends of polycarbonate and polysiloxane.

### State of the art

Energy saving and shading blankets are used to significantly reduce the energy consumption of greenhouses. The insulation blankets are usually woven polymer film strips that may be transparent, white or black, or white on one side and black on the other side, and often metalized. The blankets create an additional insulating barrier and trap an insulating air layer on both sides of the screen.

Blackout blankets on the other hand are used to control the day length and reflect the incoming radiation, thereby reducing the temperature buildup. Aluminium/PET-laminates are typically used for this type of application.

Another feature of some specific blankets is the prevention of light pollution to the surrounding environment. These, often polymeric, black and white light assimilation blankets reflect the light via the white side, thereby improving the efficiency of the lamps. The black side of the strip provides the light barrier. The transparent and black and white strips used in greenhouse blankets are mostly of polymeric composition exclusively, often PE or PP-based.

Blankets containing laminated strips with aluminium layer are preferred since they reflect the infrared radiation back to the plants and since they are designed to provide shade for the plants during the summer. The construction of a shade blanket is adapted for a sufficient air flow through the gaps between the composite aluminium-polymer film strips which assures enough ventilation.

The different strips are woven together with threads to create a greenhouse blanket. The strips therefore need to have enough tensile strength and flexibility but should also have enough UV and chemical resistance to withstand the conditions within a greenhouse for long periods of time. This would give the grower the time to benefit from his investment.

In recent years, more and more emphasis has been placed by insurance companies on the fire retardant properties of the greenhouse blankets. A fire can quickly destroy a greenhouse or put the lives of the workers in danger. Due to the largely polymeric nature of a blanket, it can support or even accelerate the fire. To overcome this, it is important that the blanket is fire-resistant but also fulfils the other important requirements. International patent application WO 94/22288 describes the use of halogen and phosphorous-based fire-resistant compositions in flame-retardant, long-time UV-stabilized drapeable screens.

Halogenated flame-retardant additives (brominated and chlorinated flame retardants) are widely used but are under scrutiny either for their own toxicity and risk of bio-accumulation, or for that of their combustion products. Several directives like for instance REACH or RoHS are established for a general phase-out of these substances. Under REACH, the producers are asked to submit a plan for safer alternatives for these substances or an R&D plan to develop suitable replacements.

The use of halogenated films in greenhouse blankets, like PVC, PCTFE and PVDF, in which the halogen functional groups are bonded to the polymer itself, reduces the risk of bio accumulation but they still have an environmental and potential health impact during processing or waste treatment. Dioxins, which pose many adverse health risks, are for instance produced as a by-product during vinyl chloride manufacture and from incineration of PVC waste.

Halogenated flame-retardant blankets are however still the material of choice, mainly because there are no efficient, cost-effective alternative solutions available yet.

Halogen and phosphorous-free flame-retardant compositions are plentiful but are often less efficient, too costly or negatively influencing other important, greenhouse-blanket related properties like UV-stability, chemical resistance and tensile strength. They often require high loadings (e.g. inorganic hydrates) or can decompose at elevated temperatures and high humidity (e.g. phosphorus compounds).

Halogen-free film solutions based on engineering thermoplastics have flame-retardant properties because of their intrinsic high-temperature features making them more difficult to ignite. They will however also tend to burn once ignited. A laminate with an aluminium foil makes it easier to ignite due to the high stiffness and thermal conductivity of aluminium. Besides that, they are costly and often have limited UV-stability. The use of sulphur-based engineering thermoplastics like PPS and P(P)SU is described in patent EP 1 825 747.

In the present invention, the term "halogen-free" should be understood in the sense that no halogen-based polymers (PVC, PVDF, ...) or halogen-based flame retardants (HBCD, Cl/Br-paraffin's) with synergists are used. Impurities comprising halogens are excluded from this definition.

### Aim of the invention

The present invention aims to disclose the use of halogen-free and fire-resistant polymer films used individually or as a laminate with a metal layer, preferably aluminium, suitable to be cut into strips and woven into blankets; the blankets being preferably destined to greenhouses.

### Summary of the invention

The present invention discloses the use of halogen-free, fire-resistant polymer films or metal-polymer film laminates for the manufacturing of strips to be woven into blankets, the polymer films comprising a polymer selected from the group consisting of polycarbonate, polycarbonate-polysiloxane block-copolymers, and blends of polycarbonate and polysiloxane.

Preferred embodiments of the present invention disclose at least one, or an appropriate combination of the following features:
- the proportion of polysiloxane in the blend of polycarbonate and polysiloxane is lower than 50wt% ;
- the strips have a width that is smaller than 25mm, preferably smaller than 8mm and a thickness smaller that is than 150µm, preferably smaller than 70µm ;
- the polymer film comprises flame-retardant additives selected from the group consisting of ammonium salts, non-polymeric phosphorus additives, melamine cyanurate and metal hydroxides ;
- the polymer film comprises UV-stabilizers ;
- the polymer films are free of a fire-resistant protective top coat ;
- the metal for the metal-polymer film laminates is aluminium ;
- the aluminium layer of the metal-polymer film laminate is covered by a corrosion-resistant topcoat ;
- the polymer film is substantially transparent or a two-colour coextruded polymer film ;
- the woven blanket is a greenhouse curtain.

### Short description of the drawings

Figure 1 represents a schematic drawing of the vertical fire test to evaluate the different examples in present invention.

Figure 2 represents an example of a composite multilayer structure of the strips for the blankets according to the present invention.

Figure 3 is a molecular representation of a block copolymer comprising polysiloxane and polycarbonate blocks.

### Detailed description of the invention

Halogen-based materials are yet the material of choice (see example 1) for fire-resistant greenhouse blankets but they have an environmental impact. Environmentally-friendly fire-resisting greenhouse blankets however face some specific issues related to their use. The nature of the blanket by itself poses some inherent difficulty. A greenhouse blanket is not a full surface but a flexible woven textile consisting of narrow strips and held together by threads. All the components of the blanket, i.e. strips and threads, should be fire-resistant to fulfil the specifications. Due to the high number of narrow strips, a blanket has in fact a very large surface area since there are many exposed edges that can form the source for flame propagation within the blanket. The influence of the specific construction of a blanket on the fire resistance becomes clear when comparing the performance of examples 5 (strips simulating a blanket) and 6 (full laminate film of 5x20cm) in the vertical fire test. The fire resistance of the blanket is significantly lower than that of a full laminate (non-slitted) of similar composition.

A further problem specifically related to blankets made of aluminium-polymer laminate strips is linked to the high thermal conductivity and stiffness of aluminium foil. The aluminium-foil/polymer-film laminate structures are more susceptible to fire than the single polymer film of similar composition since the high thermal conductivity of the aluminium ensures that the ignition temperature of the polymer is quickly reached. In addition, the stiffness of the aluminium prevents the polymer fraction of the laminate to curl away from the flame as is the case with unsupported, difficult to ignite, polymer films. These factors therefore require the polymer fraction to be highly fire-resistant. One can conclude that the higher the content of foil-based laminates in the blanket, the more difficult it is to make a blanket fire-resistant.

The use of fire-resistant top coats to provide the necessary fire-resistance in aluminium laminates has been described. These fire-resistant top coats effectively shield the underlying substrate. It is however known to those skilled in the art that fire-resistant top coats by themselves do not provide the required level of fire resistance in aluminium-containing blankets if the supporting polymer film underneath is not fire-resistant enough. The fire test results (see table 1) on polysiloxane coated/PET/aluminium laminate (example 4) prove that this laminate is more fire-resistant than an equivalent non-coated version (example 2). Still, once the flame ignites the edges of the tapes, it quite easily jumps to the edges of neighbouring strips and so on. This results in a rapid acceleration of the flame throughout the blanket.

Even when replacing the standard oriented PET with a commercially available flame-retardant version (examples 3 and 5), the blanket does not pass the fire test. To overcome this, the present invention tries to replace the supporting polyester film and the fire-resistant topcoat with one highly fire-resistant halogen-free polymer film. The polymer film for the strips of the woven blanket of the present invention can be used as supporting layer for the aluminium-containing laminate but also for the pure polymeric strips, be it transparent or coloured, in some of the blankets or any combination of those strips in the blanket.

The polymer composition of the film of the present invention is based on polycarbonate or siloxane fractions in combination with polycarbonate polymers. The incorporation of siloxane fractions into the polymer results in improved fire-resistance, UV-stability, impact resistance, flexibility and low temperature performance. The use of these fire-resistant film compositions makes fire-resistant siloxane-based top coats redundant. These siloxane-containing films can be produced via extrusion, blown or cast. Aluminium laminates are typically produced via lamination (heat or adhesive) or extrusion coating.

Halogen-free fire-resistant polymers that fulfil most of the demanding requirements are silicone polymers. Polydimethylsiloxane for instance has a limiting oxygen index of 29. The use of alkyl-silicone polymers in coatings to produce flame-retardant structures is described in patent DE 43 411 36.

Silicones are not only characterised by good fire-resistant properties but also by excellent UV-stability and chemical resistance. The excellent durability is attributed to the high Si-O bond strength. The Si-O bond strength is significantly higher than the C-C or C-O bond strengths of organic polymers.

Silicone polymers are however highly flexible and are typically very soft due to the very large bond angle of the Si-O-Si bridge units, typically around 143 degrees. While a certain degree of flexibility is beneficial for the drapeability of the blankets, the soft nature of silicon polymers limits the use of pure silicon polymers in greenhouse blankets. The polymeric fractions in the blanket need sufficient tensile strength to support the processing (weaving) of the thin strips and normal operational use of the blankets. One can reduce bond angle and thus the flexibility by substituting large, bulky alkyl or aryl side groups on the silicon atom in a silicone polymer. This however reduces for instance the UV-resistance and chemical resistance.

Alternatively, one can use silicone polymers as flame-retardant additives in a blend with a suitable polymeric matrix. The effectiveness of these blends is proven (example 10) but it however appears more difficult to obtain a homogenous film composition due to the limited affinity of inorganic silicon polymers with other organic polymers. Alternatively, one can use polymers with substituted silicone functional groups or in other words with silicones incorporated in the side branches of the polymer. This will result in a significant increase in the limiting oxygen index.

Suitable, extrudable, silicone-substituted polymers are however commercially not readily available.

Alternatively, one could also prepare a block copolymer consisting of silicone blocks and blocks of a suitable matrix polymer. A suitable matrix polymer that can be combined with siloxanes is polycarbonate. The properties of both polymers are very compatible with respect to the present invention. Polycarbonate is for instance already flame-retardant (example 9) or can be made even more fire-resistant as described in the patent BE 1006984. Polycarbonate also has a high tensile strength. The UV-stability of polycarbonate is, on the other hand, limited and it is not really flexible. This can be overcome via the addition of (polyorganosiloxane) additives described in the documents JP 2010 138412 and JP 2004 162015, but it is more efficient for this application to prepare a block copolymer of PC with siloxane.

US patent 5,504,177 for instance describes the preparation of such a silicone polycarbonate block copolymer. These types of block copolymers combine for instance the high tensile strength of polycarbonate blocks with the fire resistance and chemical and UV-resistance of the siloxane blocks. Polycarbonate by itself already has a limiting oxygen index of ± 27% but for siloxane block copolymers thereof the limiting oxygen index increases to 38- 40%. US patent 6,630,525 describes a fire-resistant polycarbonate composition which requires a minimum amount of flame-retardant additives among others due to the presence of siloxane blocks.

Metal layer free PC/siloxane (example 8) films show good performance in the vertical fire tests (see table 1). The same conclusions can be taken for the laminated PC/siloxane compositions with aluminium as described in example 7.

### Examples

*Comparative Example 1: Halogen-based reference laminate*
   Foil: alu (9µm)
   Adhesive: ADCOTE™ 545-75EA+CATALYST F 3g/sqm
   Film: PVC 25µm (Venfin UV-Plus)
   The solvent-based adhesive is coated via a laboratory gravure roll directly onto the PVC-film. The solvent is subsequently evaporated in an oven at 60°C and the PVC-web with the adhesive is brought into contact with the thin aluminium foil. After curing of the adhesive for at least 7 days, the laminate is ready for fire testing.
   No corrosion-resistant topcoat was applied on the aluminium for the fire test since it has been shown that this has no significant effect on the flammability of the laminate.
*Comparative Example 2: Reference laminate non-FR PET*/*alu combination*
   Foil: alu (9µm)
   Adhesive: ADCOTE™ 545-75EA+CATALYST F 5g/sqm
   Film: oPET (23µm) (Lumirror 10.10)
   The laminate is prepared as described in example 1.
*Comparative Example 3: Influence of a commercial FR-PET film on the fire-resistance of the aluminium strip*
   Foil: alu (9µm)
   Adhesive: ADCOTE™ 545-75EA+CATALYST F 5g/sqm
   Film: Flame retardant oPET (23µm) (Hostaphan RF)
*Comparative Example 4: Influence of the fire-resistance of the PET film on the fire-resistance of the siloxane-coated aluminium strip composition*
   Foil: alu (9µm)
   Adhesive: ADCOTE™ 545-75EA+CATALYST F 5g/sqm
   Film: oPET (23µm) (Lumirror 10.10)
   Siloxane coating: Silikopon EC 5g/sqm from Wacker Chemie
   After the laminate is prepared as described above, a fire-resistant siloxane coating was applied directly onto the fire-resistant PET-film and dried in an oven.
*Comparative Example 5: Influence of the fire-resistance of the FR-PET film on the fire-resistance of the siloxane-coated aluminium strip composition*
   Foil: alu (9µm)
   Adhesive: ADCOTE™ 545-75EA+CATALYST F 5g/sqm
   Film: Flame retardant oPET (23µm) (Hostaphan RF)
   Siloxane coating: Silikopon EC 5g/sqm from Wacker Chemie
*Comparative Example 6: Non-slitted sample of the composition according to example 5 with similar dimensions*
*Example 7: Influence of replacing the supporting fire-resistant PET substrate with a PC*/*siloxane block copolymer films on the fire-resistant properties in the slitted version*
   Foil: alu (9µm)
   Adhesive: ADCOTE™ 545-75EA+CATALYST F 5g/sqm
   Film: Lexan EXL1330 (23µm)
   A Lexan EXL 1330 film is extruded on a Göttfert lab extruder in a cast set-up. The Lexan film is subsequently laminated according to the process described above.
*Example 8: Single, non-laminated, PC*/*Siloxane block copolymer film*
   Film based on Lexan EXL 1330 resin (23µm) in the slitted version.
*Example 9: Polycarbonate film*
   Film: Macrofol DE 6-2 (23µm) in the slitted version.
*Example 10: Blend of polycarbonate with a polysiloxane-containing masterbatch in the slitted version*
   Film (23µm) composition: 70 parts Calibre 303 PC + 30 parts MB-008 from Dow

### Test set-up

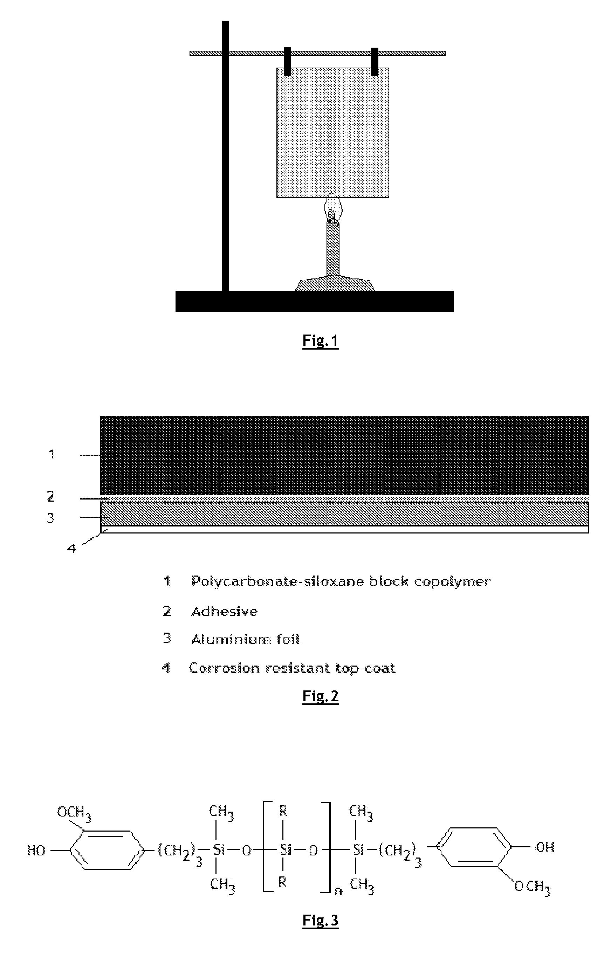

To prepare the different samples for the fire test a 5 by 20cm piece is taken and slitted over the length of the sample. Each slit is separated by ± 5mm. This method produces a suitable simulation screen since the different strips are in close proximity, as is the case in a real screen. For the fire test, the slitted samples are placed in a fixed vertical set-up and a Bunsen burner is placed underneath. A schematic representation is presented in figure 1. The flame of the Bunsen burner is brought into contact with the lower part of the slitted sample during 3 seconds ensuring that the position of the Bunsen burner relative to samples is always the same. The initiation and possible propagation of the flame is monitored until it reaches the end of the sample. The higher the number, the more flame-retardant. The infinity sign (∞) indicates that the flame doesn't travel to the end of the vertical sample. The results of the flame test are summarised in table 1.

### Comments on the test results

The most critical blanket compositions are the aluminium-polymer laminates, like for instance in example 2, which burns in one second to the top of the sample.

The FR-oPET/alu samples have a slightly better behavior, in particular if a siloxane coating is applied on the aluminum layer. Nevertheless a FR-oPET 23µm/alu 9µm/SiOx slitted version still burns within 8 seconds to the top of the sample.

The influence of the slits is shown by the comparison of examples 5 and 6.

The beneficial presence of polycarbonate is shown in example 9 since this polymer by itself resists 28 seconds before the flame reaches the top of the sample.

Polymer-film or multiple-layer metal-polymer film laminate blankets based on polysiloxane-containing polycarbonates as in examples 7, 8 and 10 yield the best results since they resist the flame.

**Table 1: Summarized vertical fire test results**

| **Ex.** | **Composition of the sample** | **Burning behaviour** | **Time in (s)** |
|---|---|---|---|
| (1) | PVC 25µm/alu 9µm laminated film (5x20cm) | No ignition, burning stops as soon as flame is removed | ∞ |
| (2) | oPET 23µm/alu 9µm laminated film (5x20cm) | Immediate big flame and accelerated burning behaviour | 1 |
| (3) | FR-oPET 23µm/alu 9µm laminated film (slitted) | Immediate big flame, slightly reduced flame propagation | 3 |
| (4) | oPET 23µm/alu 9µm/SiOx laminated film (slitted) | Immediate flame, flame propagation is further reduced | 5 |
| (5) | FR-oPET 23µm/alu 9µm/SiOx laminated film (slitted) | Difficult to ignite, flame propagates once ignited | 8 |
| (6) | FR-oPET 23µm/alu 9µm/SiOx laminated film (5x20cm) | Difficult to ignite, small flames that stop automatically | ∞ |
| 7 | PC/silox-block copo/alu 9µm laminated film (slitted) | No ignition, no flame propagation | ∞ |
| 8 | PC/silox-block copo Monolayer (slitted) | No ignition, film curls away from the flame | ∞ |
| 9 | Polycarbonate film monolayer (slitted) | Very slow burning | 28 |
| 10 | PC/polysiloxane blend monolayer (slitted) | Ignites but flame stops automatically | ∞ |

| | | | |
|---|---|---|---|
| (..)= comparative examples | | | |

## Claims

1. Use of halogen-free, fire-resistant polymer films or metal-polymer film laminates for the manufacturing of strips to be woven into blankets, the polymer films comprising a polymer selected from the group consisting of polycarbonate, polycarbonate-polysiloxane block-copolymers, and blends of polycarbonate and polysiloxane.

2. Use of halogen-free fire-resistant polymer films according to Claim 1, wherein the proportion of polysiloxane in the blend of polycarbonate and polysiloxane is lower than 50wt%.

3. Use of halogen-free fire-resistant polymer films according to any of the previous claims, wherein the strips have a width that is smaller than 25mm, preferably smaller than 8mm, and a thickness that is smaller than 150µm, preferably smaller than 70µm.

4. Use of halogen-free fire-resistant polymer films according to any of the previous claims, wherein the polymer film comprises flame-retardant additives selected from the group consisting of ammonium salts, non-polymeric phosphorus additives, melamine cyanurate and metal hydroxides.

5. Use of halogen-free fire-resistant polymer films according to any of the previous claims, wherein the polymer film comprises UV-stabilizers.

6. Use of halogen-free fire-resistant polymer films according to any of the previous claims, wherein the polymer films are free of a fire-resistant protective top coat.

7. Use of halogen-free fire-resistant polymer films according to any of the previous claims, wherein the metal for the metal-polymer film laminates is aluminium.

8. Use of halogen-free fire-resistant polymer films according to Claim 7, wherein the aluminium layer of the metal-polymer film laminate is covered by a corrosion-resistant topcoat.

9. Use of halogen-free fire-resistant polymer films according to any of the previous claims, wherein the polymer film is substantially transparent or a two-colour coextruded polymer film.

10. Use of halogen-free fire-resistant polymer films according to any of the previous claims, wherein the woven blanket is a greenhouse curtain.
